**Europäisches Patentamt**

**European Patent Office**

**Office européen des brevets**

(11) Numéro de publication : **0 615 122 B1**

(12) **FASCICULE DE BREVET EUROPEEN**

(45) Date de publication du fascicule du brevet :
**07.06.95 Bulletin 95/23**

(51) Int. Cl.$^6$ : **G01N 5/02**

(21) Numéro de dépôt : **93103928.3**

(22) Date de dépôt : **11.03.93**

(54) Procédé et dispositif pour suivre la cinétique de réhydratation de produits déshydratés.

(43) Date de publication de la demande :
**14.09.94 Bulletin 94/37**

(45) Mention de la délivrance du brevet :
**07.06.95 Bulletin 95/23**

(84) Etats contractants désignés :
**AT BE CH DE DK ES FR GB GR IE IT LI LU NL PT SE**

(56) Documents cités :
**EP-A- 0 344 554
DE-A- 3 922 380
DE-C- 835 217
DE-C- 1 215 961
SOVIET INVENTIONS ILLUSTRATED Section EI, Week K42, 30 Novembre 1983, Derwent Publications Ltd., London , GB ; Class S03, AN 83-794107/42 ; & SU-A-983 514**

(73) Titulaire : **SOCIETE DES PRODUITS NESTLE S.A.
Case postale 353
CH-1800 Vevey (CH)**

(72) Inventeur : **Kaabi, Carine
Gentiane 12
CH-2300 La Chaux-De-Fonds (CH)**
Inventeur : **Lambelet, Pierre
Tour Ronde 7
CH-1806 Saint Legier (CH)**
Inventeur : **Rossier, Yvan
Chemin du Lussy 26
CH-1806 Saint Legier (CH)**
Inventeur : **Seiler, Alfred
Rte du Jorat 31
CH-1000 Lausanne 27 (CH)**

(74) Mandataire : **Thomas, Alain et al
55, avenue Nestlé
CH-1800 Vevey (CH)**

## Description

L'invention concerne un procédé pour suivre en continu la cinétique de réhydratation de produits déshydratés non solubles, ainsi que le dispositif pour la mise en oeuvre dudit procédé.

Jusqu'à présent, pour déterminer la réhydratation des produits déshydratés, par exemple des pâtes, on opérait de la manière suivante. On trempait les pâtes dans l'eau dans les conditions normales de reconstitution, c'est-à-dire à une température de l'eau de l'ordre de 80°C, et on les pesait, après les avoir égouttées, à des intervalles de temps réguliers. Cette manière de procéder n'est pas du tout pratique, car elle nécessite la présence quasi permanente d'une personne et conduit à des résultats peu fiables et peu reproductibles, car l'égouttage peut laisser une présence d'eau non souhaitée et dépend de la manière d'opérer de chaque utilisateur.

Le but de la présente invention est de mettre au point un procédé pour suivre en continu la cinétique de réhydratation de produits séchés, qui soit plus universel et plus fiable et qui permette un suivi de manière automatique, sans nécessiter en permanence la présence d'un opérateur.

Selon le procédé de l'invention, on immerge les produits déshydratés dans l'eau à la température souhaitée et on suit en fonction du temps la variation de la force exercée sur le plateau d'une balance par l'ensemble produit et eau de réhydratation contenus dans une enceinte.

Cette variation de force tient compte de la poussée d'Archimède exercée sur le produit selon la relation suivante:

$$\Delta F = \rho \, (\Delta Vo - \Delta V)$$

$\Delta F$ est la variation de la force mesurée par la balance,
$\rho$ est le poids spécifique de l'eau,
$\Delta Vo$ est la variation de volume d'eau dans l'enceinte contenant le produit à réhydrater, et
$\Delta V$ est la variation de volume de l'échantillon.

L'intérêt de ce procédé réside dans le fait qu'il suffit d'immerger l'échantillon dans l'eau, de le rendre solidaire d'un système de pesée pour pouvoir suivre dans le temps la variation de la force, sans aucune autre manipulation.

Les produits déshydratés non solubles analysables selon le procédé de l'invention sont des légumes, des fruits, de la viande de même que des pâtes ou du riz aussi bien séchés classiquement que lyophilisés.

L'intérêt de connaître la cinétique de réhydratation de produits séchés vient du fait qu'il est important de savoir combien de temps il faudra pour réhydrater complètement, par exemple, des carottes, lorsque celles-ci font partie d'un mélange pour potage déshydraté qui doit être prêt au bout d'un temps t. Or, il est bien évident que l'on doit pouvoir disposer de carottes déshydratées qui se reconstituent en une durée inférieure à t, de manière à obtenir un produit ayant la texture adéquate.

En outre, lorsqu'on reconstitue le produit déshydraté, par exemple des pâtes, chez le consommateur, on opère à une température qui avoisine la température d'ébullition de l'eau. Il faut donc envisager la mesure de la cinétique de réhydratation à des températures proches des conditions réelles de reconstitution. La mise en oeuvre du procédé selon l'invention se fait à une température comprise entre 20 et 90°C.

La durée de réhydratation dépend également de la température: plus celle-ci est élevée, plus la durée est faible. En général, on opère pendant un temps compris entre 30 sec. et 24 heures, de préférence entre 5 et 30 min.

L'invention concerne également le dispositif pour la mise en oeuvre du procédé qui comporte un moyen de suspension solidaire du plateau d'une balance et un système de retenue des produits déshydratés comprenant une nacelle avec des ouvertures laissant passer l'eau mais gardant l'air à l'intérieur, un couvercle de nacelle surmonté d'une tige creuse prévue pour s'engager sur le moyen précitée. Le moyen de suspension consiste normalement en une potence.

Lors de la mesure, le système de retenue contenant le produit déshydraté est immergé de sorte que l'eau pénètre par les ouvertures de la nacelle et imprègne le produit. On suit alors dans le temps, grâce à la liaison de la balance avec un système d'acquisition de données, la variation de la force exercée sur le moyen de suspension.

De manière à éviter que l'échantillon ne remonte, il est prévu dans l'intérieur du couvercle de la nacelle, une grille. Au moment où on plonge le système de retenue dans l'eau, il est important que l'air déplacé dans la nacelle s'en aille. On prévoit pour cette raison, dans l'intérieur de la tige de suspension, un cône d'obturation solidaire d'un ressort. Au moment de l'immersion, on maintient la tige de suspension ouverte pour évacuer l'air et on la referme ensuite pour toute la durée de la mesure.

Le dispositif selon l'invention comprend en outre un système pour réguler la température de réhydratation, de manière à opérer aux températures réelles d'utilisation chez le consommateur.

Au lieu de suivre la variation de la force exercée pour le moyen de suspension, on peut aussi suivre la variation du poids du récipient contenant l'eau servant à la réhydratation. Ceci est obtenu en plaçant ce récipient sur le plateau de la balance et en rendant le moyen de suspension de la nacelle indépendant de la balance. Dans ce cas, la relation devient:

$$\Delta F = \rho \, (\Delta V - \Delta Vo).$$

La suite de la description est faite en référence aux dessins sur lesquels

**Fig. 1**
est une coupe du système de retenue selon l'invention,
**Fig. 2**

est une représentation schématique du dispositif selon l'invention et

**Fig. 3**

est une représentation graphique de la cinétique de réhydratation pour des carottes.

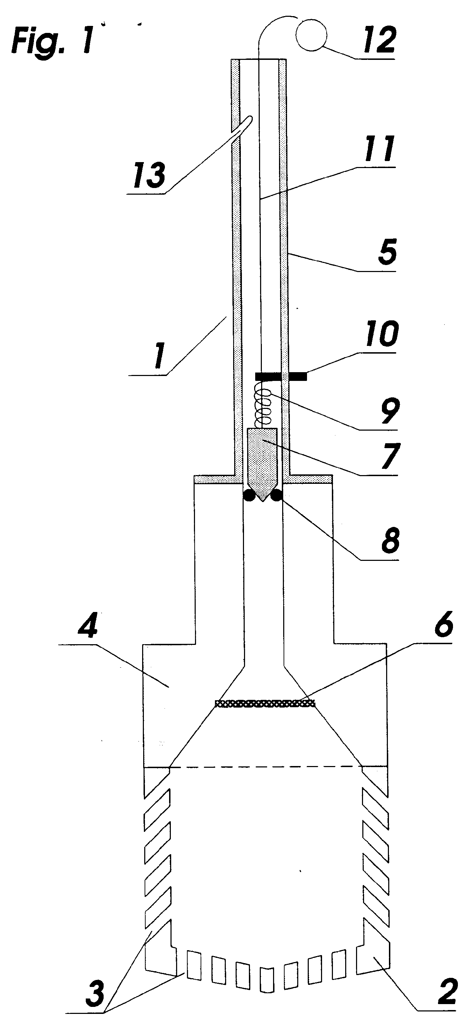

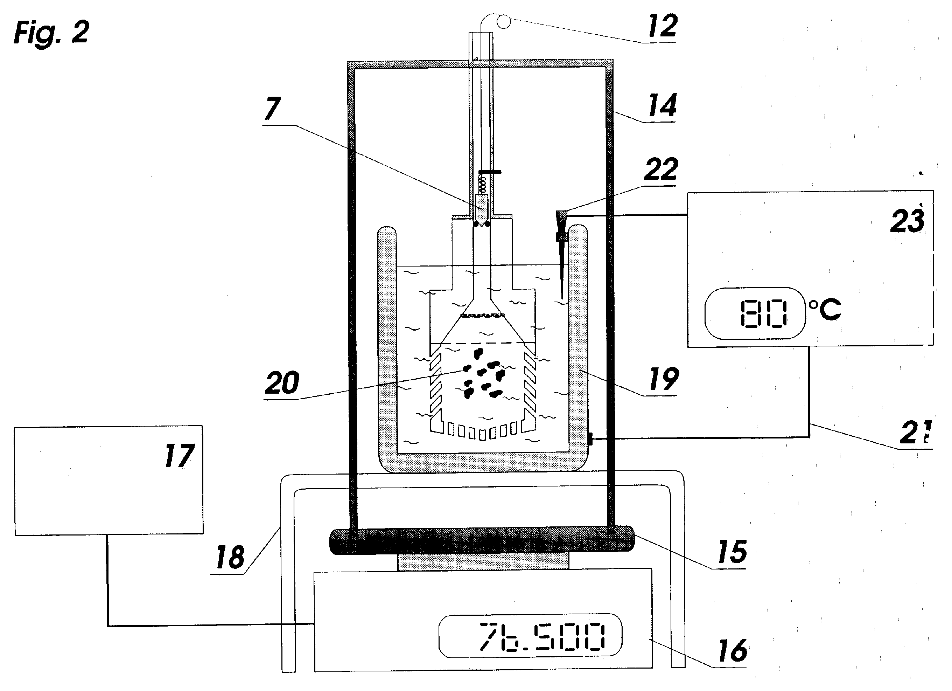

Le système de retenue (1) (Fig. 1) comporte une nacelle (2) dans laquelle on dispose le produit à réhydrater. Cette nacelle (2) comporte une multitude d'ouvertures (3) permettant la circulation de l'eau. Les ouvertures disposées sur le côté sont orientées de façon à empêcher l'air de s'échapper de l'enceinte contenant l'échantillon. Le nombre et la forme de ces ouvertures ne sont pas critiques. Le fond de la nacelle est conique afin de favoriser la montée des bulles formées au fond du récipient à haute température. Ce système comprend en outre un couvercle (4) surmonté d'une tige de suspension (5). Le couvercle est fixé à la nacelle par un système à baïonnettes. A l'intérieur du couvercle, il est prévu une grille (6) évitant la montée du produit à analyser. L'intérieur de la tige de suspension comprend un cône d'obturation (7) appuyant sur un anneau d'étanchéité (8). Ce cône est relié à un ressort (9) appuyant contre une butée (10). Un fil métallique (11) relie le cône (7) à un anneau (12) permettant à l'opérateur d'ouvrir le système pour laisser échapper l'air. Une encoche (13) est prévue pour suspendre le système à une potence (14) (Fig. 2) solidaire du plateau (15) d'une balance (16). La balance est reliée à un système (17) d'acquisition de données. Sur un support (18) indépendant de la balance on dispose le récipient (19) contenant l'eau dans laquelle on immerge le système de retenue (1). On introduit dans la nacelle le produit (20) à étudier. Le récipient (19) comporte un manteau chauffant relié selon (21) au système de régulation de la température (23). Ce système (23) est asservi à une sonde de température (22).

On opère de la manière suivante: on dispose le produit (20) à réhydrater dans la nacelle (2) qu'on referme, on plonge le système (1) dans l'eau et on le suspend à la potence (14). A ce moment, on soulève l'obturateur (7) de manière à laisser l'air s'échapper et on le referme. La balance indique alors (t=0) la force initiale exercée sur la potence.

On suit alors en fonction du temps la variation de cette force.

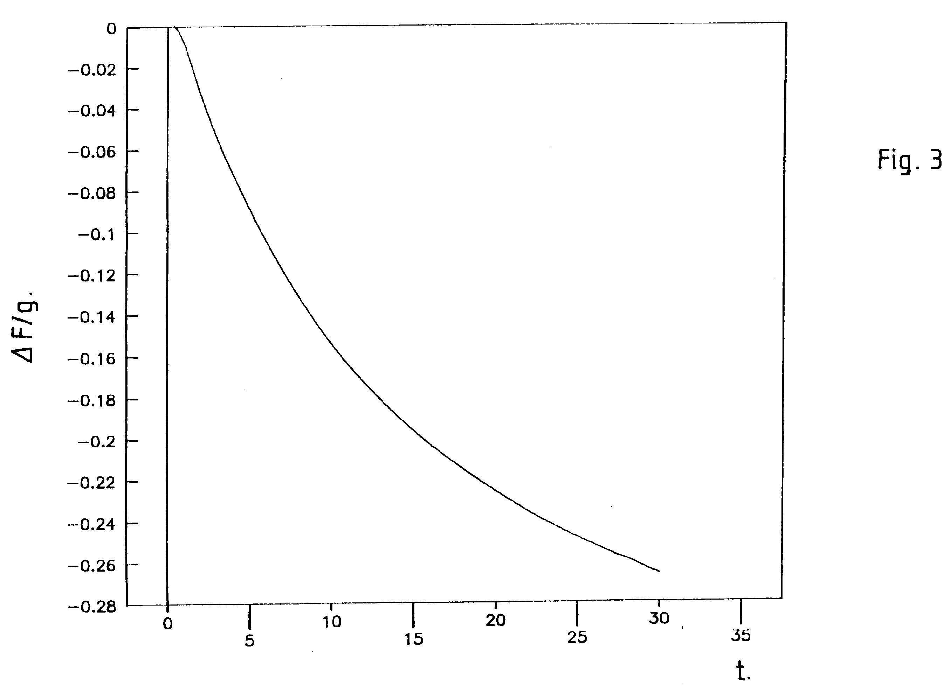

La suite de la description est faite en référence à l'exemple de la Fig. 3 montrant la cinétique de réhydratation de carottes.

**Exemple**

On travaille sur le système décrit ci-dessus avec 10 g de carottes qu'on immerge dans de l'eau du robinet à 22°C. On enregistre pendant 30 min. la force F(t) exercée sur la balance par la potence. A chaque instant on soustrait à cette force la force initiale F(t=0) et on obtient ainsi la valeur $\Delta F(t)$. Cette valeur est ensuite corrigée en soustrayant à chaque instant la valeur correspondante $\Delta F'(t)$ observée dans les mêmes conditions mais en absence d'échantillon (blanc). La valeur corrigée de $\Delta F(t)$ est finalement normalisée par rapport au poids de l'échantillon. On obtient ainsi la courbe de la Fig. 3. Le fait que le signal observé décroît au cours du temps est dû au gonflement des carottes lors de leur réhydratation ($\Delta V > \Delta Vo$).

**Revendications**

1. Procédé pour suivre en continu la cinétique de réhydratation de produits déshydratés non solubles, caractérisé en ce qu'on immerge lesdits produits déshydratés dans l'eau et on suit en fonction du temps la variation de la force exercée sur le plateau (15) d'une balance (16) par l'ensemble produit et eau de réhydratation contenus dans une enceinte.

2. Procédé selon la revendication 1, caractérisé en ce que les produits déshydratés non solubles sont des légumes, des fruits, des pâtes ou du riz.

3. Procédé selon l'une des revendications 1 ou 2, caractérisé en ce qu'on opère à une température comprise entre 20 et 90°C.

4. Procédé selon l'une des revendications 1 à 3, caractérisé en ce qu'on opère pendant une durée comprise 30 secondes et 24 heures.

5. Dispositif pour la mise en oeuvre du procédé selon l'une quelconque des revendications 1 à 4, caractérisé en ce qu'il comporte un moyen de suspension (14) solidaire du plateau (15) d'une balance (16) et un système de retenue des produits déshydratés comprenant une nacelle (2) avec des ouvertures (3) laissant passer l'eau mais gardant l'air à l'intérieur, un couvercle (4) de nacelle (2) surmonté d'une tige creuse (5) prévue pour s'engager sur le moyen précité.

6. Dispositif selon la revendication 5, caractérisé en ce que la balance (16) est reliée à un système d'acquisition de données (17).

7. Dispositif selon l'une quelconque des revendications 5 ou 6, caractérisé en ce que l'intérieur du couvercle (4) de la nacelle (2) comporte une grille (6).

8. Dispositif selon l'une quelconque des revendications 5 à 7, caractérisé en ce que l'intérieur de la tige (5) comprend un cône d'obturation (7) solidaire d'un ressort (9).

9. Dispositif selon l'une quelconque des revendications 5 à 8, caractérisé en ce qu'il comprend un système pour réguler la température (23) de réhydratation.

## Patentansprüche

1. Verfahren zur kontinuierlichen Beobachtung der Rehydrationskinetik von nichtlöslichen getrockneten Produkten, dadurch gekennzeichnet, daß man die getrockneten Produkte in Wasser eintaucht und in Abhängigkeit von der Zeit die Änderung der Kraft beobachtet, die auf die Schale (15) einer Waage (16) von der in einer Kammer enthaltenen Gesamtheit von Produkt und Rehydrationswasser ausgeübt wird.

2. Verfahren nach Anspruch 1, dadurch gekennzeichnet, daß die nichtlöslichen getrockneten Produkte Gemüse, Obst, Teigwaren oder Reis sind.

3. Verfahren nach einem der Ansprüche 1 oder 2, dadurch gekennzeichnet, daß man bei einer Temperatur von 20 bis 90°C arbeitet.

4. Verfahren nach einem der Ansprüche 1 bis 3, dadurch gekennzeichnet, daß man während einer Zeit von 30 Sekunden bis 24 Stunden arbeitet.

5. Vorrichtung zur Durchführung des Verfahrens nach einem der Ansprüche 1 bis 4, dadurch gekennzeichnet, daß sie eine Aufhängungseinrichtung (14), die mit der Schale (15) einer Waage (16) fest verbunden ist, und ein System zum Zurückhalten der getrockneten Produkte besitzt, das aus einem Korb (2) mit Öffnungen (3), die das Wasser durchtreten lassen, jedoch die Luft im Inneren zurückhalten, und einen Korbdeckel (4) besteht, über dem eine hohle Stange (5) angeordnet ist, die zum Eingreifen in die genannte Einrichtung vorgesehen ist.

6. Vorrichtung nach Anspruch 5, dadurch gekennzeichnet, daß die Waage (16) mit einem Datenerfassungssystem (17) verbunden ist.

7. Vorrichtung nach einem der Ansprüche 5 oder 6, dadurch gekennzeichnet, daß das Innere des Deckels (4) des Korbs (2) ein Gitter (6) besitzt.

8. Vorrichtung nach einem der Ansprüche 5 bis 7, dadurch gekennzeichnet, daß das Innere der Stange (5) einen mit einer Feder (9) fest verbunden Verschlußkegel (7) besitzt.

9. Vorrichtung nach einem der Ansprüche 5 bis 8, dadurch gekennzeichnet, daß sie ein System (23) zur Regelung der Rehydrationstemperatur besitzt.

## Claims

1. A method for continuously monitoring the rehydration kinetics of insoluble dehydrated products, characterized in that the dehydrated products are immersed in water and the variation in the force applied to the pan (15) of a balance (16) by the combination of the product and the water of rehydration contained in an enclosure is monitored as a function of time.

2. A method as claimed in claim 1, characterized in that the insoluble dehydrated products are vegetables, fruits, pastas or rice.

3. A method as claimed in claim 1 or 2, characterized in that it is carried out at a temperature of 20 to 90°C.

4. A method as claimed in any of claims 1 to 3, characterized in that it is carried out over a period of 30 seconds to 24 hours.

5. An arrangement for carrying out the method claimed in any of claims 1 to 4, characterized in that it comprises suspension means (14) fixed to the pan (15) of a balance (16) and a system for holding the dehydrated products comprising a cage (2) formed with openings (3) to allow the water to pass through, but to keep the air inside and a cover (4) for the cage (2) surmounted by a hollow rod (5) designed to engage with the means mentioned above.

6. An arrangement as claimed in claim 5, characterized in that the balance (16) is connected to a data acquisition system (17).

7. An arrangement as claimed in claim 5 or 6, characterized in that the interior of the cover (4) of the cage (2) comprises a grill (6).

8. An arrangement as claimed in any of claims 5 to 7, characterized in that the interior of the rod (5) comprises a closure cone (7) fixed to a spring (9).

9. An arrangement as claimed in any of claims 5 to 8, characterized in that it comprises a system for controlling the rehydration temperature (23).

**Fig. 1**

Fig. 2

Fig. 3

EP 0 615 122 B1